# EUROPEAN PATENT APPLICATION

(11) **EP 4 023 725 A1**
(43) Date of publication of application: **06.07.2022**
(21) Application number: 21213636.0
(22) Date of filing: 10.12.2021
(51) Int. Cl.: C09D 5/18, C09D 7/61, C09D 7/65, C09D 7/40, H01B 19/04, C08K 3/34, C08K 5/3492, C08K 3/22, C08K 3/38

(54) **COATING FOR IMPROVED FLAMMABILITY PERFORMANCE IN ELECTRICAL COMPONENTS**

(30) Priority: 15.12.2020 US 202017122451
(71) Applicant: TE Connectivity Services GmbH, 8200 Schaffhausen (CH)
(72) Inventor: HEMOND, Jessica H. B., Middletown, PA 17057 (US); DESHMUKH, Ranjan Deepak, Middletown, PA 17057 (US)
(74) Representative: Scott, Fiona Penelope Elaine

(57) **Abstract**

A coating for improved flammability performance for use with electrical components for use with multiple surfaces, including metal and polymeric surfaces is provided for herein. The coating comprises a carrier, primary additives and secondary additive and provides for enhanced performance of the electrical components by eliminating or delaying the start of a flame event or in the case of a flame event, decreasing the flame height.

## Description

### FIELD OF THE INVENTION

The present invention relates to a coating for improved flammability performance in electrical components which enhances the performance of the electrical component by eliminating or delaying the start of a flame event or in case of a flame event, decreasing the flame height during an electrical overload occurrence.

### BACKGROUND OF THE INVENTION

In the electronic industry, electrical components such as connectors are used in many different applications. Safety is a key goal with such components, especially in the home appliance industry. Due to the possibility of improper human usage, over current, or short circuit failures within wired electrical components, fire protection requirements were created to determine the flammability of such components.

Fire protection requirements have been created by industry to evaluate and rate the flammability of components used in the electronic industry. Historically, a number of different methods have been developed to evaluate material flammability and fire resistance. These methods provide a way to compare the component's tendency to resist ignition, self- extinguish flames (should ignition possibly occur) and to not propagate fire. These methods include both direct flame and indirect flame testing. An example of such an indirect flame testing method is the nichrome wire test in UL 749. Another example of such a method is the glow wire test of IEC 60695-2-11 (Edition 2.0; 2014-02).

The nichrome wire test simulates the effects of an overheated electrical connection. In the UL 749 test, eleven amps of current are supplied to a nichrome wire which is placed on top of the connector for 20 minutes. The time to ignition and the flame duration are recorded. The flame height is also measured. The sample passes the test if no flame emanates from the specimen at a height greater than 50.0 mm from the top of the specimen at any point during the testing.

The glow wire test of IEC 60695-2-11 is used when the glow wire testing is performed on the end product. Glow wire testing is performed by heating an element to a pre-determined temperature. The sample to be tested is fixed in place and tissue paper is positioned below the sample. After reaching the pre-determined temperature, the heating element is then pressed into the sample material under a set force of 1N for 30 seconds. The sample passes the test if it does not ignite or if it self- extinguishes within 30 seconds after removal of the heated element. Also, the sample may not ignite the tissue paper if drip occurs.

For safety reasons, it is desirable that electrical components pass these tests as well as other industry safety tests. Electrical components provide the environment a risk. High current density with the possibility of high resistance can result in local heating of the component and even possibly flames. Halogenated flame retardants have been added to electrical components to improve flame retardant capabilities to the component in the past. US Patent Publication No. 2019/0112455A1 describes the addition of halogen containing flame retardants to a polyamide composition which can be used in electrical parts and components. Although helpful in retarding flames, with the trend toward more environmentally friendly products, halogenated flame retardants may not be preferred.

US Patent Publication No. 2014/0371357A1 describes a plastic component for use in a live part in an unattended household appliance which complies with IEC 60335. The part is made from a halogen free flame retardant composition comprising a thermoplastic polyamide polymer, 10-40 weight % of glass fiber, 10-40 weight % of melam and 0-15 weight % of a halogen free flame retardant. However, flammability is not the only performance requirement for connectors. With the high glass and high flame retardant loading, other properties such as elongation are reduced and can make the material incompatible with a particular end application.

Many times, a component may pass the open flame test of UL-94 but not meet the requirements of either the nichrome wire test or the glow wire test. Furthermore, the addition of traditional or newer non-halogen flame retardants to such components to achieve these tests may negatively impact the processing or molding of the component and is not desirable.

Despite advances in safety, there is still a need for a selectively applied coating composition which can be used in electrical components such as connectors whether made from polymers or from metal, which eliminates or delays the start of a flame event or in the case of a flame event decreases the flame height. Such a composition would have improved flammability performance. This coating could also provide advantages versus an external component such as a metallic shield in that it would not be displaced or lost.

Thus, there is a need for a coating composition which is preferably low halogen or halogen free, that provides improved performance for the electrical connector so that it meets the high performance glow wire test of IEC 60695-2-11 as well as the nichrome wire test. This coating can be easily applied to multiple surface/components of the electrical connector. For example, the connector may have components that are made of a polymer such as the housing or cover. The same connector may also have metal components such as the terminal which could be coated with the coating composition of the instant invention. The coating composition should preferably be able to be applied to both.

### SUMMARY OF THE INVENTION

An embodiment is directed to a coating composition according to claim 1, the composition comprising a carrier, primary additives, and secondary additives. The coating can be used to impart improved flammability performance in electrical components.

An embodiment is directed to an electrical component having a coating having improved flammability performance, the coating comprising a carrier, primary additives and may include secondary additives.

Other features and advantages of the present invention will be apparent from the following more detailed description of the preferred embodiment, taken in conjunction with the accompanying drawings which illustrate, by way of example, the principles of the invention.

### DESCRIPTION OF DRAWINGS

FIG.1 shows a graph with test results showing the average ignition time of three different coating samples according to the invention as compared to an uncoated sample of the same material.
FIG. 2 shows the average flame height for the same samples of FIG. 1 and compares them to an uncoated sample of the same underlying material.

### DETAILED DESCRIPTION OF THE INVENTION

The description of illustrative embodiments according to principles of the present invention is intended to be read in connection with the accompanying drawings, which are to be considered part of the entire written description. In the description of embodiments of the invention disclosed herein, any reference to direction or orientation is merely intended for convenience of description and is not intended in any way to limit the scope of the present invention. Relative terms such as "lower," "upper," "horizontal," "vertical," "above," "below," "up," "down," "top" and "bottom" as well as derivative thereof (e.g., "horizontally," "downwardly," "upwardly," etc.) should be construed to refer to the orientation as then described or as shown in the drawing under discussion. These relative terms are for convenience of description only and do not require that the apparatus be constructed or operated in a particular orientation unless explicitly indicated as such. Terms such as "attached," "affixed," "connected," "coupled," "interconnected," and similar refer to a relationship wherein structures are secured or attached to one another either directly or indirectly through intervening structures, as well as both movable or rigid attachments or relationships, unless expressly described otherwise.

Moreover, the features and benefits of the invention are illustrated by reference to the preferred embodiments. Accordingly, the invention expressly should not be limited to such embodiments illustrating some possible non-limiting combination of features that may exist alone or in other combinations of features, the scope of the invention being defined by the claims appended hereto.

The present invention relates to a novel coating for use with electrical components providing improved flammability performance for such components. The novel coating comprises a carrier with primary additives and secondary additives. The novel coating can be used on both polymeric and metal electrical components to impart improved flammability performance to such components. An example of such a component is an electrical connector which has both a polymeric component and a metal component. Examples of polymeric components include those made of polyamides. An example of a metal component is one made of copper or copper alloys. The wall thickness of such a component which is to be coated can vary but ideally ranges from about 0.4 mm to 1 mm.

The carrier used in the coating composition of the instant invention is generally one that can be easily used in the application. These carriers should not have a short pot life or be prone to curing during the application process, but should have a short time to be tack free. If required, the coating should be at a temperature low enough to not impact the performance of the additives or require heat that would be excessive when viewed with the temperature capability of the base component. Suitable carriers include paints, varnishes, potting materials and/or other adhesives. Preferably, the carriers comprise of materials that will adhere well to the components such as epoxies, polyurethanes or acrylics. The carrier can also comprise a mixture of epoxies, polyurethanes or acrylics. The determination of which specific carrier to use in the desired application is dependent upon the desired end result and is well within the skill of one of ordinary skill in the art. Examples of suitable carriers include Fireguard E-84 coating, available from Shield Industries, Inc.; and Temperkote 600, Temperkote 805 and Temperkote 850 coatings, available from Flame Control Company, LLC. The carriers may include an additional thinning agents such as water, solvents or other additives such as Fire Block fire retardant from Firefreeze Worldwide, Inc., so that the viscosity of the carrier is appropriate for application to the electrical component. These agents may be process additives which have little to no residue in the final coating or may be have active ingredients that contribute to better performance. Generally, the use of a fast drying, low initial viscosity and long shelf life carrier, such as a paint or varnish is preferable for use in the coating composition.

The primary additives that are part of the coating composition include thermally conductive electrically insulative additives, or solid-state foaming agents and mixtures thereof. In one embodiment, two primary additives are used in the coating composition. Thermally conductive electrically insulative additives include boron nitride or alumina oxide or any other material exhibiting thermally conductive and electrically insulative properties which can be incorporated into the carrier and do not detract from the properties of the electrical component. The primary additives also include a solid-state foaming agent. An example of a solid-state foaming agent is thermoplastic microspheres such as Expancel 461 DU20, Expancel 909 WU80 and Expancel 920 WUF from Nouryon. Preferably, the thermally conductive electrically insulative additive is in the range of about 1-5% (nominal %) of the total coating composition. Also, the solid-state foaming agent is preferably from 5-10% (nominal %) of the coating composition. The amount of the primary additives in the coating composition ranges from about 5 to about 15% (nominal %) of the coating.

In addition to primary additives, the coating may include secondary additives. The secondary additives include secondary flame retardants, synergists, char agents and mixtures thereof. An example of a secondary flame retardant is melamine polyphosphate such as Melapur 200 from BASF. An example of a synergist includes zinc borate. An example of the char agent is clay. An example of a suitable clay includes ADINS Clay 20, an organomodified high purity, ultrafine and naturally occurring needle-like silicate, based upon quaternary ammonium salt, available from Tolsa. The amount of the secondary additives can be in the range of about 5 to 10% (nominal %) of the coating composition. The addition of a secondary additive in the coating composition is not necessary if such additive is included in the carrier.

In one embodiment of the coating, melamine polyphosphate is in the range of 2-10% (nominal %) of the coating. The synergist in this embodiment is 1-3% (nominal %) of the coating and the clay is from 0.5-2% (nominal %) of the coating. The thermally conductive electrically insulative additive is 1-3% (nominal %) of the coating and the solid-state foaming agent is 5-10% (nominal %). All these components are in an epoxy carrier, which ranges from about 90 to about 96% (nominal %) of the coating composition.

Other additives can be added to the coating to achieve the desired results. Examples of such other additives include plasticizers, stabilizers, processing aids, pigments and other fillers. All additives in the coating, including the primary additives and the secondary additives must be capable of surviving the standard use temperature of any component coated by the coating. Standard use temperatures will be dependent upon the end application but are generally at least 105 °C.

It is believed that the coating is formulated so as to reduce and/or delay the transfer of heat to the polymer component of the electrical component using the solid-state foaming agent and the thermally conductive additives. The addition of the char agent as part of the secondary additives provides for the reduction of the flame height if a flame occurs. The combination of these components results in a coating composition that imparts improved flammability performance in an electrical component coated with such a coating composition.

The coating of the instant invention is formulated by mixing the carrier with the primary additives and then adding the secondary additives. In one embodiment, the components of the coating are mixed with a high-speed mixer such as a FlackTek mixer. Any other mixer which can uniformly disperse additives in the carrier can be used. Alternatively, the secondary additives can be compounded into the carrier prior to being mixed with the primary additives or vice versa. All of the additives may be mixed together and then mixed into the carrier.

The time for mixing the carrier with the primary additives and the secondary additives is dependent upon the additives themselves. The exact conditions for such mixing are well within the scope of one of ordinary skill in the art.

The novel coating composition of the instant invention can be applied by brush to either a polymeric or metallic electrical component of an electrical connector. Other application methods include spraying, 2D printing and dipping. The method used to apply the coating is dependent upon the final component being coated and is well within the skill of one of ordinary skill in the art. The coating thickness will vary, but is preferably less than 1mm. thick, so that it can achieve the desired improved flammability performance.

Several different samples of the coating composition of the instant invention were formulated and tested. The uncoated sample is made from a commercially available polyamide that is UL94V0 rated. In Sample 1, the coating used had the following formulation: 5% (nominal %) Expancel 461DU20 microsphere. 5% (nominal %) Melapur 200, 2.5%(nominal %) clay, 2.5% (nominal %) zinc borate in a carrier of Fireguard E-84 paint. Sample 2 had the following coating formulation: 10%(nominal %) Expancel 909WU80 microspheres, 5% (nominal %) Melapur 200 melamine polyphosphate, 2.5% (nominal %) clay, 2.5% (nominal %) zinc borate; 5%(nominal %) alumina oxide with the balance, the carrier. The carrier in this Sample 2 is Temperkote 850 heat resistant primer. In the final formulation of Sample 3, 10% (nominal %) Expancel 920WUF microsphere, 5% (nominal %) Melapur 200 melamine polyphosphate, 2.5% (nominal %) clay, 2.5% (nominal %) zinc borate and 5% (nominal %) alumina oxide were mixed with the carrier. In this Sample 3, the carrier is Temperkote 850 heat resistant primer.

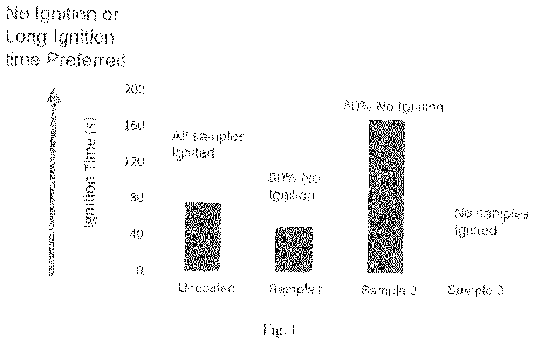

FIG. 1 shows a comparison of the various coating formulations on a polyamide housing as well as an uncoated polyamide housing. FIG. 1 shows the results in which the coatings were evaluated by UL 749, on the basis of no ignition or long ignition time as well as height of flame, if applicable. The graph shows the average ignition of the samples using UL749 test. From the testing, all the uncoated samples ignited. The coating of Sample 3 did not ignite at all.

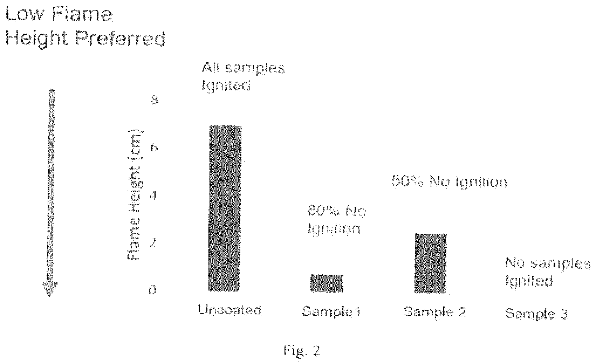

FIG. 2 shows a comparison of the various coating formulations on a polyamide housing as well as the uncoated polyamide housing. FIG. 2 shows the results in which low flame height was preferred. Lower flame height reduces the risk of fire being spread from the connector to other parts of the device. The graph shows the average flame height of the samples tested according to UL749. Once again, the uncoated samples all ignited. Again, the coating of Sample 3 did not ignite.

One skilled in the art will appreciate that the invention may be used with many modifications of structure, arrangement, proportions, sizes, materials and components and otherwise used in the practice of the invention, which are particularly adapted to specific environments and operative requirements without departing from the principles of the present invention. The presently disclosed embodiments are therefore to be considered in all respects as illustrative and not restrictive, the scope of the invention being defined by the appended claims, and not limited to the foregoing description or embodiments.

## Claims

1. A coating for improved flammability performance in electrical components comprising:
a carrier;
primary additives;
and secondary additives.

2. The composition as recited in claim I, wherein the carrier is chosen from the group comprising epoxies, polyurethanes and acrylics.

3. The composition as recited in claim 1 or claim 2, wherein the primary additives are thermally conductive electrically insulative additives and solid-state foaming agents.

4. The composition as recited in claim 3, wherein the thermally conductive electrically insulative additives are chosen from the group comprising of boron nitride, aluminum oxide and mixtures thereof.

5. The composition as recited in claim 3, wherein the solid-state foaming agent comprises thermoplastic microspheres.

6. The composition as recited in any one of the preceding claims, wherein the secondary additives are chosen from the group comprising secondary flame retardants, synergists, char agents and mixtures thereof.

7. The composition as recited in claim 6, wherein said secondary flame retardant is melamine polyphosphate.

8. The composition as recited in claim 6, wherein said synergist is zinc borate.

9. The composition as recited in claim 6, wherein said char agent is clay.

10. An electrical component having improved flammability performance, said electrical component being coated with a coating according to any one of claims 1 to 9.

11. The electrical component of claim 10, wherein said component is made of a polymer.

12. The electrical component of claim 11, wherein said polymer is a polyamide.

13. The electrical component of claim 10, wherein said component is made of a metal.

14. The electrical component of claim 13, wherein said metal is copper.

15. The composition according to any one of claims I to 9 comprising 2 to 10wt% melamine polyphosphate; 1 to 3wt% of a synergist; 0.5 to 2wt% of clay; 1 to 3wt% of a thermally conductive electrically insulative material; 5 to 10wt% of a solid state foaming agent and an epoxy carrier.
